(19) Europäisches Patentamt
European Patent Office
Office européen des brevets

(11) Veröffentlichungsnummer: **0 020 812**
**B1**

(12) # EUROPÄISCHE PATENTSCHRIFT

(45) Veröffentlichungstag der Patentschrift: **07.03.84**

(51) Int. Cl.[3]: **C 09 B 67/42,** C 09 B 67/38, C 09 F 1/04, D 06 L 3/12, C 08 G 65/26, C 08 G 65/32

(21) Anmeldenummer: **79103296.4**

(22) Anmeldetag: **05.09.79**

(54) **Verwendung wasserlöslicher, durch Anlagerung von Aethylenoxid und/oder Propylenoxid an modifizierte Naturharzsäuren gebildeter Produkte als Präparationsmittel für Farbstoffe.**

(30) Priorität: **16.06.79 DE 2924404**

(43) Veröffentlichungstag der Anmeldung: **07.01.81 Patentblatt 81/1**

(45) Bekanntmachung des Hinweises auf die Patenterteilung: **07.03.84 Patentblatt 84/10**

(84) Benannte Vertragsstaaten: **BE CH DE FR GB IT NL**

(56) Entgegenhaltungen:
**EP - A - 0 009 647**
**EP - A - 0 009 648**
**DE - A - 2 443 063**
**DE - A - 2 520 527**
**FR - A - 1 008 635**
**FR - A - 2 121 618**
**FR - A - 2 245 739**
**US - A - 3 094 499**

(73) Patentinhaber: **HOECHST AKTIENGESELLSCHAFT, Postfach 80 03 20, D-6230 Frankfurt am Main 80 (DE)**

(72) Erfinder: **Deubel, Reinhold, Dr., Geierfeld 51, D-6232 Bad Soden am Taunus (DE)**
Erfinder: **Opitz, Konrad, Dr., Schwedenstrasse 22, D-6237 Liederbach (DE)**
Erfinder: **Kruse, Hubert, Luisenstrasse 33, D-6233 Kelkheim (Taunus) (DE)**
Erfinder: **Schneider, Manfred, Cuntzstrasse 1, D-6239 Eppstein/Taunus (DE)**
Erfinder: **Uhrig, Heinz, Feldbergstrasse 59, D-6374 Steinbach/Taunus (DE)**

**EP 0 020 812 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verwendung wasserlöslicher, durch Anlagerung von Äthylenoxid und/oder Propylenoxid an modifizierte Naturharzsäuren gebildeter Produkte als Präparationsmittel für Farbstoffe

Gegenstand der Erfindung ist die Verwendung von wasserlöslichen, durch Anlagerung von Äthylenoxid und/oder Propylenoxid an modifizierte Naturharzsäuren gebildeten Produkten der allgemeinen Formel (I)

$$A-[(X-O)_n-H]_m$$

worin A für

a) modifizierte Naturharzsäuren, die durch Disproportionierung, Dimerisierung, Hydrierung, Dehydrierung oder durch Umsetzung aromatischer Hydroxyverbindungen bzw. halogenabspaltender Aryl-, Aralkyl- oder Cycloalkyl-Verbindungen mit handelsüblichen Kolophoniumarten gewonnen werden, oder
b) Veresterungsprodukte von 1 bis 4, vorzugsweise 1 bis 2 Mol natürlicher oder gemäss a) modifizierter Naturharzsäuren mit 1 Mol eines 2- bis 6wertigen Alkohols oder Gemische solcher Veresterungsprodukte, oder
c) Maleinatharze, die aus handelsüblichen Kolophoniumarten durch Umsetzung mit Maleinsäureanhydrid und anschliessender Veresterung der Anhydridgruppe erhalten werden,

X für gleiche oder verschiedene Gruppen der Formel

$$-CH_2-CH_2- \text{ und } -CH_2-CH(CH_3)-,$$

n für eine Zahl von 8 bis 100, und
m für eine ganze Zahl von 1 bis 5 steht,
als Präparationsmittel für Wasser schwer lösliche und optische Aufheller, insbesondere Dispersionsfarbstoffe.

Die erfindungsgemäss zu verwendenden Anlagerungsprodukte der allgemeinen Formel (I) sind zum Teil als Färbereihilfsmittel und zum Dispergieren von Pigmenten für Anstrichfarben bekannt (FR-A-1 008 635). Überraschenderweise führt die Verwendung der Verbindungen der Formel (I) als Präparationsmittel für schwerlösliche Farbstoffe, die keine Pigmente darstellen, und optische Aufheller zu Farbstoffzubereitungen, die sich durch eine Vielzahl vorteilhafter Eigenschaften auszeichnen. Die Verbindungen der allgemeinen Formel (I) können erhalten werden, indem man die zugrunde liegenden modifizierten Naturharzsäuren oder die daraus mit mehrwertigen Alkoholen hergestellten Veresterungsprodukte mit Äthylenoxid und/oder Propylenoxid zu den entsprechenden Alkylenoxidaddukten umsetzt.

Als Ausgangsprodukte eignen sich Harz-Phenol-Verbindungen, wie sie durch Addition von Phenol, Kresol, o-Kresolacetat, Salicylsäure, Guajacol, Di-Phenolen, Polyphenolen sowie α- oder β-Naphthol an natürliche Harzsäuren wie Abietinsäure, Dehydroabietinsäure, Dihydroabietinsäure, Tetrahydroabietinsäure, Levopimarsäure, Dextropimarsäure und Isodextropimarsäure, wie sie in handelsüblichen Kolophoniumarten vorliegen, sowie an disproportionierte, hydrierte, dehydrierte und dimerisierte Harzsäuren in Gegenwart von stark sauren oder säureabspaltenden Katalysatoren, wie z.B. Bortrifluorid, Chlorwasserstoff, Zinntetrachlorid, Aluminiumchlorid oder Mineralsäuren bei Temperaturen zwischen 20 und 120 °C in organischem Medium gewonnen werden, wobei auf 1 Mol Harzsäure zweckmässig 0,5 bis 0,8, vorzugsweise 0,7 Mol der genannten Phenole oder Naphthole eingesetzt werden.

Als weitere Ausgangspunkte eignen sich modifizierte Naturharzsäuren, wie sie durch Umsetzung von Naturharzsäuren mit halogenabspaltenden Aryl-, Aralkyl- oder Cycloalkyl-Verbindungen, z.B.
Benzylchlorid, Bis-chlor-methylbenzol,
Chlormethyltoluol, Benzalchlorid, 4-Chlorbenzylalkohol, 4-Chlor-diphenyl,
4-Chlor-diphenyläther,
4-Chlormethyl-diphenyläther,
1-Chlornaphthalin, 2-Chlornaphthalin,
1-(Chlormethyl)-naphthalin,
4-Chlor-1-naphthol
oder Cyclohexylchlorid in Gegenwart eines Katalysators, wie z.B. Zinkchlorid, bei Temperaturen zwischen 100 bis 220 °C, vorzugsweise 150 bis 210 °C, gewonnen werden, wobei auf 1 Mol Harzsäure zweckmässig 0,5 bis 1,0, vorzugsweise 0,7 bis 0,8 Mol der genannten Halogenverbindungen eingesetzt werden. Ferner eignen sich als Ausgangsprodukte Maleinatharze, deren Anhydridgruppen z.B. mit
Glykol, Diglykol, Glycerin,
1,1,1-Trimethylolpropan, Pentaerythrit
oder auch einwertigen Alkoholen verestert sind.

Als Vertreter der mehrwertigen Alkohole zur Veresterung von natürlichen und modifizierten Harzsäuren seien beispielsweise genannt: Glykol, Glycerin, 1,2,4-Butantriol,
Butandio-(1,4), 1,1,1-Trimethylolpropan,
Pentaerythrit, 2,4-Dihydroxy-3-methylolpentan, Hexantriol, Sorbit, Anhydrosorbit,
Hexit und Mannit. Die Veresterung der modifizierten Harzsäuren mit den mehrwertigen Alkoholen erfolgt im Molverhältnis 1 : 1 bis 4 : 1, vorzugsweise 1 : 1 bis 2 : 1, nach bekannten Veresterungsverfahren bei 180 bis 300 °C, vorzugsweise 200 bis 270 °C, gegebenenfalls unter Zusatz eines Schleppmittels wie eines aromatischen Kohlenwasserstoffes oder Chlorkohlenwasserstoffes. Als Katalysator können z.B.
Benzolsulfonsäure, p-Toluolsulfonsäure,
Borsäure, Zinnpulver oder Schwefelsäure verwendet werden.

Die Umsetzung mit Alkylenoxiden, wie 1,2-Propylenoxid oder bevorzugt mit Äthylenoxid erfolgt nach bekannten Methoden, vorzugsweise mit Alkalihydroxiden oder -alkoxiden als Katalysator bei 100 bis 200 °C, bevorzugt bei 140 bis 180 °C. Die Menge Äthylenoxid und/oder Propylenoxid wird dabei so bemessen, dass eine gute Wasserlöslichkeit der Anlagerungspunkte erreicht wird. Zweckmässig werden an jede freie Carboxy- und Hydroxygruppe 8 bis 100, vorzugsweise 25 bis 75 Mol Äthylenoxid und/oder Propylenoxid angelagert, je nach dem erwünschten Ausmass an Hydrophilie.

Als Alkalihydroxid eignen sich Kaliumhydroxid oder bevorzugt Natriumhydroxid, als Alkalialkoxid Natriummethylat oder -äthylat, wobei die Konzentration bevorzugt 0,05 bis 1,0 Gew.-%, bezogen auf die modifizierten Harzsäuren bzw. der daraus hergestellten Veresterungsprodukte sowie Maleinatharze, bei Beginn der Oxalkylierung sein soll. Die Oxalkylierung kann drucklos oder in Druckgefässen mit Propylenoxid oder bevorzugt Äthylenoxid oder Mischungen von beiden durchgeführt werden, wobei das Äthylenoxid gasförmig oder flüssig zugeführt werden kann. Sofern unter Druck gearbeitet wird, beträgt der Arbeitsdruck 1 bis 10, vorzugsweise 2 bis 8 bar.

Diese Anlagerungsprodukte der Formel (I) stellen Präparationsmittel für Farbstoffe dar und erlauben die Herstellung hochkonzentrierter, dispergiermittelarmer Farbstoffpräparationen, wobei sich diese Präparationen durch eine Vielzahl vorteilhafter Eigenschaften auszeichnen.

Unter dem Begriff «Farbstoffe» werden hier in Wasser schwer lösliche Farbstoffe und optische Aufheller, insbesondere Dispersionsfarbstoffe verstanden. Bevorzugt dienen daher die Anlagerungsprodukte der Formel (I) als Präparationsmittel für Dispersionsfarbstoffe.

Die bisher bekannten Zubereitungen von Dispersionsfarbstoffen weisen eine Reihe von Nachteilen auf, die die Zubereitungen bei Verwendung der erfindungsgemässen Produkte nicht zeigen. So verursachen herkömmliche Zubereitungen von Dispersionsfarbstoffen, die hohe Anteile anionischer Dispergiermittel (in Flüssigeinstellungen 0,5 Teile oder mehr und in Pulvereinstellungen 1,0 Teil oder mehr auf 1,0 Teil Dispersionsfarbstoff) enthalten, beim Anrühren von Druckpasten mit synthetischen Verdickungsmitteln einen unerwünschten Abfall der Viskosität. Normalerweise steigt mit zunehmendem Gehalt an Dispergiermittel im Mahl- oder Knetteig auch die Viskosität der Zubereitung so stark an, so dass in ungünstigen Fällen, vor allem bei etwas höheren Temperaturen, die Einstellungen dickflüssig oder sogar fest werden. Anderseits kann der Anteil des anionischen Dispergiermittels nicht beliebig verringert werden, da sonst instabile oder von vornherein ungenügend fein verteilte Dispersionen erhalten werden.

In den Färbereien werden aus Rationalisierungsgründen immer kürzere Flottenverhältnisse der Färbebäder angestrebt. Dafür werden möglichst hochkonzentrierte Farbstoffeinstellungen bevorzugt. Die hohen Anteile anionischer Dispergiermittel in herkömmlichen Dispersionsfarbstoffpräparationen können bei modernen Färbeverfahren, wie in der Jet-Färberei, zu unerwünschter Schaumbildung führen. Oft wird auch ein starkes Farbstoffrückhaltevermögen, vor allem bei Klotzfärbungen, bebeanstandet. In Druckereien bedingt der hohe Dispergiermittelanteil in üblichen Dispersionsfarbstoffpräparationen ausser dem schon genannten ungünstigen Einfluss auf die Viskosität der Druckpasten auch ein aufwendiges Nachwaschen der Drucke.

Die vorliegende Erfindung erlaubt es nun, Dispersionsfarbstoffzubereitungen herzustellen, die den genannten Einschränkungen nicht unterworfen sind und sich besonders für eine Reihe von Spezialaufgaben eignen. So können wässrige Dispersionen, die unter Verwendung der erfindungsgemässen Produkte erhalten werden, ohne Qualitätseinbusse zu Pulvern getrocknet werden. Sowohl die Pulver als auch die Flüssigeinstellungen eignen sich hervorragend zum Färben und Bedrucken der verschiedensten Materialien.

Im folgenden werden weitere bevorzugte Ausgestaltungen der Erfindung näher erläutert.

Bevorzugt werden solche Anlagerungsprodukte der allgemeinen Formel (I), in der A für eine modifizierte Naturharzsäure, die durch Disproportionierung oder durch Umsetzung aromatischer Hydroxyverbindungen bzw. halogenabspaltender Aryl-, Aralkyl- oder Cycloalkyl-Verbindungen mit handelsüblichen Kolophoniumarten gewonnen wird, oder für ein Veresterungsprodukt von 1 bis 4, vorzugsweise 1 bis 2 Mol natürlicher oder modifizierter Naturharzsäuren mit 1 Mol eines 2- bis 6wertigen Alkohols und n für eine Zahl von 25 bis 75 steht.

Bevorzugte Verwendungen führen zu Zubereitungen, die 5 bis 90, insbesondere 30 bis 90 Gew.-% Farbstoff, 2 bis 40, insbesondere 2 bis 20 Gew.-% eines oder mehrerer Anlagerungsprodukte (I), bis zu 20, insbesondere aber bis zu 10 Gew.-% anionische Dispergiermittel und bis zu 70 Gew.-% Wasser und/oder Wasserrückhaltemittel enthalten. Darüber hinaus können die Zubereitungen auch andere nichtionogene Tenside und in solchen Präparationen übliche Zusätze enthalten, beispielsweise hygroskopische Mittel, Schaumdämpfer, Entstaubungsmittel oder Konservierungsmittel.

Besonders bevorzugte Verwendungen führen zu hochkonzentrierten, dispergiermittelarmen Präparationen, die 30 bis 90 Gew.-% Farbstoff und 3 bis 20 Gew.-% Anlagerungsprodukt (I) enthalten. Sofern die Präparationen noch die genannten oder andere übliche Zusätze enthalten, können diese Additive vor, während oder nach der Dispergierung der Farbstoffe zugesetzt werden.

Sofern die Präparationen anionische Dispergiermittel enthalten, werden die hierfür üblicherweise verwendeten Dispergiermittel eingesetzt. Bevorzugt sind Kondensationsprodukte aus aromatischen Sulfonsäuren und Formaldehyd, insbesondere Kondensationsprodukte aus Alkylnaphthalinsulfonsäuren, vor allem Methylnaphthalinsulfonsäuren und Formaldehyd, wie sie aus der DE-PS 2 442 514 bekannt sind. Geeignet sind auch Kondensationsprodukte aus gegebenenfalls substituiertem Phenol mit Formaldehyd sowie Alkalisalze von Ligninsulfonsäuren.

Im Vergleich zu üblichen Dispersionsfarbstoffzubereitungen zeichnen sich die durch die erfindungsgemässe Verwendung erhaltenen Präparationen durch einen wesentlich geringeren Gehalt an oberflächenaktiven Substanzen aus. Die erfindungsgemäss zu verwendenden wasserlöslichen Anlagerungsprodukte (I) zeichnen sich darüber hinaus durch eine sehr gute biologische Abbaubarkeit aus, so dass es nur zu einer minimalen Abwasserbelastung kommt.

Trotz des geringen Einsatzes an oberflächenaktiven Substanzen erhält man durch die erfindungsgemässe Verwendung Präparationen, die bei sehr hohem Farbstoffgehalt gut fliessfähig und lagerstabil sind.

Wegen der guten Verträglichkeit mit synthetischen Verdickungsmitteln können die Präparationen in Drucktinten für den Rouleauxdruck mit sehr «seichten» Gravuren eingesetzt werden, wobei farbstarke Drucke erhalten werden. Ebenso ist der Einsatz im Rotationsfilmdruck möglich.

Die Herstellung der Präparationen kann nach allen bekannten Verfahren erfolgen. Zur Herstellung von Präparationen von Dispersionsfarbstoffen wird der Dispersionsfarbstoff oder eine Mischung von Dispersionsfarbstoffen mit einem oder mehreren der genannten Anlagerungsprodukte (I), gegebenenfalls einem anionischen Dispergiermittel sowie gegebenenfalls anderen Zusätzen vermischt oder einer mechanischen Zerkleinerung unterworfen. Hierbei kann die Reihenfolge der Zugabe der Komponenten auch verändert werden. Die mechanische Zerkleinerung erfolgt bevorzugt in Knetern, Kugelmühlen, Dispergatoren, Perlmühlen, Sandmühlen oder Attritoren. Das Erreichen der gewünschten Feinverteilung von im allgemeinen etwa 3 µm, vorzugsweise 1 µm Teilchengrösse kann durch einen Filtertest oder mit dem Mikroskop festgestellt werden. Die so erhaltenen Präparationen enthalten die Dispersionsfarbstoffe in stabiler feinverteilter Form.

Die Feinverteilung bleibt auch bei mehrwöchiger Lagerung sowohl bei Raumtemperatur als auch bei 50 °C erhalten und wird auch durch Kälteeinwirkung nicht beeinträchtigt.

Zur Herstellung einer pulverförmigen Präparation können wässrige Präparationen in üblicher Weise, beispielsweise mittels Zerstäubungstrocknung, getrocknet werden. Die so erhaltenen pulverförmigen Präparationen werden durch einfaches Einrühren in Wasser oder in Bindemittellösungen gut dispergiert.

Durch den geringen Gehalt an oberflächenaktiven Substanzen tritt beim Einsatz der Farbmittelpräparationen in Färbebädern oder Druckpasten keine retardierende Wirkung auf und es werden brillante Farbtöne erhalten. Ausserdem kann im Falle des Direktdrucks die erforderliche Nachwäsche wesentlich verkürzt werden oder bei Verwendung körperarmer Verdickungen sogar ganz entfallen, ohne dass es zu einer merklichen Griffverschlechterung der bedruckten Ware käme oder Brillanz und Farbton beeinträchtigt würden. In diesem Falle werden die Präparationen vorteilhaft auf einen pH-Wert von etwa 6 bis 8 eingestellt.

In einer besonders bevorzugten Ausgestaltung der Erfindung werden Dispersionsfarbstoffe eingesetzt, die bei atmosphärischem Druck zwischen 150 und 220 °C zu mindestens 60% unzersetzt sublimieren, insbesondere Dispersionsfarbstoffe aus der Reihe der Mono- oder Disazo-, Anthrachinon-, Chinophthalon-, Nitro-, Azomethin-, Naphthalintetracarbonsäure- oder Benzoxanthenfarbstoffe oder Mischungen solcher Farbstoffe. Die so erhaltenen Präparationen eignen sich zur Herstellung von Druckfarben für das Bedrucken von Transferpapieren für den Thermodruck.

In den folgenden Beispielen beziehen sich Prozentangaben und Teile auf das Gewicht, sofern nichts anderes angegeben ist.

Beispiel 1

400 Teile des trockenen Farbstoffes der Formel (1)

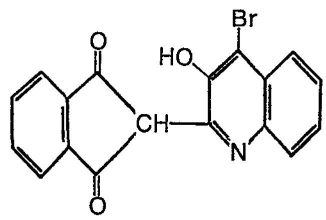
(1)

werden in einer Lösung aus 40 Teilen Umsetzungsprodukt des Glycerinmonoesters von disproportionierter Abietinsäure mit 75 Mol Äthylenoxid (im folgenden «nichtionogenes Dispergiermittel II»),

20 Teilen eines Kondensationsproduktes aus Methylnaphthalinsulfonsäure und Formaldehyd wie es in Beispiel D der DE-PS 2 442 514 beschrieben ist (im folgenden «anionisches Dispergiermittel A»), 100 Teilen Äthylenglykol, 300 Teilen Wasser und 2 Teilen Chloracetamid als Konservierungsmittel in einer Perlmühle mit Siliquarzitperlen (∅ 1 mm) unter Kühlung gemahlen. Nach 3 Stunden Mahldauer erhält man eine Dispersion, deren Teilchen zu über 90% kleiner als 3 µm sind. Der Mahlteig wird mit Wasser auf 1000 Teile aufgefüllt und von den Perlen abfiltriert. Man erhält eine gut fliessfähige Präparation, die sowohl bei Raumtemperatur als auch bei 50 °C mehrere Wochen lagerstabil und unempfindlich gegen Kälteeinwirkung ist.

Beispiel 2

350 Teile des Farbstoffes der Formel (2)

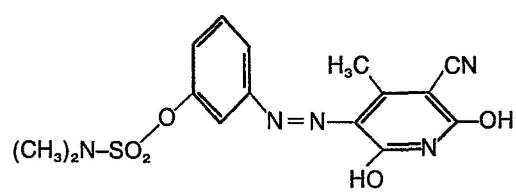
(2)

werden in einer Lösung von 100 Teilen Umsetzungsprodukt des Kolophoniumglycerinesters mit 75 Mol Äthylenoxid (im folgenden «nichtionogenes Dispergiermittel III») in 300 Teilen Wasser und 150 Teilen Äthylenglykol in einer Perlmühle unter Kühlung mit Siliquarzitperlen (∅ 1 mm) während 3 Stunden gemahlen. Nach dieser Zeit erhält man

eine gut fliessfähige Dispersion, deren Teilchen zu über 90% kleiner als 3 µm sind. Die flüssige Teigeinstellung wird mit 4 Teilen Pentachlorphenolnatrium und Wasser auf 1000 Teile aufgefüllt und von den Perlen abfiltriert. Die Präparation ist gut fliessfähig, über längere Zeit sowohl bei Raumtemperatur als auch bei 50 °C lagerstabil und unempfindlich gegen Kälteeinwirkung.

Beispiel 3

400 Teile des Farbstoffs der Formel (3)

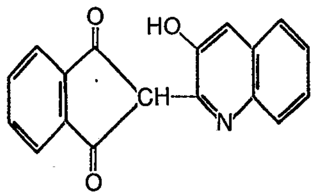 (3)

werden in einer Lösung von 40 Teilen nichtionogenem Dispergiermittel III und 20 Teilen anionischem Dispergiermittel A in 300 Teilen Wasser und 100 Teilen Äthylenglykol in einer Perlmühle unter Kühlung mit Siliquarzitperlen (∅ 1 mm) während 4 Stunden gemahlen. Nach dieser Zeit erhält man eine gut fliessfähige Dispersion, deren Teilchen zu über 90% kleiner als 3 µm sind. Die flüssige Teigeinstellung wird unter Zusatz von 5 Teilen Zink-Natrium-N,N-dimethyl-dithiocarbaminat mit Wasser auf 1000 Teile aufgefüllt und von den Perlen abfiltriert. Die Präparation ist gut fliessfähig, über längere Zeit sowohl bei Raumtemperatur als auch bei 50 °C lagerstabil und unempfindlich gegen Kälteeinwirkung.

Verwendet man anstelle der in Beispiel 3 genannten Komponenten, die in der folgenden Tabelle 1 angegebenen Farbstoffe, Dispergiermittel und übrigen Bestandteile und verfährt im übrigen analog Beispiel 3, so resultieren ebenfalls freifliessende, wässrige, lagerstabile Teigeinstellungen.

Tabelle 1 (Angaben bezogen auf 1000 Teile Präparation)

| Beispiel | Farbstoff Teile | Farbstoff Nr. | nichtionisches Dispergiermittel Teile | nichtionisches Dispergiermittel Nr. | anionisches Dispergiermittel Teile | anionisches Dispergiermittel Art | Äthylenglykol Teile | Konservierungsmittel Teile | Konservierungsmittel Art | Mahldauer (Stunden) |
|---|---|---|---|---|---|---|---|---|---|---|
| 4 | 350 | 4 | 90 | IV | 10 | A | 150 | 4 | M | 4 |
| 5 | 400 | 1 | 40 | V | 20 | A | 100 | 5 | P | 3 |
| 6 | 400 | 5 | 16 | IV | 20 | A | 100 | 4 | P | 4 |
| 7 | 400 | 6 | 26 | VI | 7 | D | 200 | 4 | P | 4 |
| 8 | 400 | 6 | 40 | II | 13 | B | 200 | 4 | M | 4 |
| 9 | 400 | 6 | 40 | VII | 13 | B | 200 | 4 | M | 4 |
| 10 | 400 | 6 | 40 | VIII | 13 | B | 200 | 4 | M | 4 |
| 11 | 400 | 6 | 40 | IX | 13 | B | 200 | 4 | M | 4 |
| 12 | 300 | 7 | 90 | II | 15 | A | – | 5 | P | 4 |
| 13 | 300 | 8 | 60 | II | 12 | A | – | 4 | G | 3 |
| 14 | 300 | 8 | 75 | X | 15 | A | – | 4 | G | 4 |
| 15 | 400 | 1 | 50 | XI | 20 | A | 100 | 3 | C | 3 |
| 16 | 400 | 6 | 50 | XI | 15 | B | 200 | 4 | M | 4 |

Erläuterungen zu der Tabelle 1:

a) die Farbstoffe 4 bis 8 haben folgende Formeln:

(4) 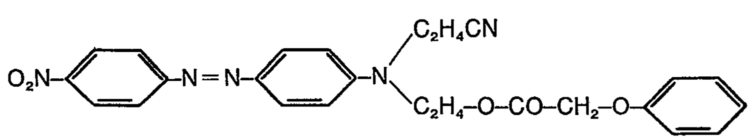

(5) 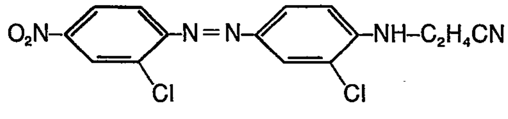

(6) 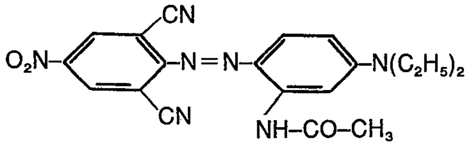

(7) 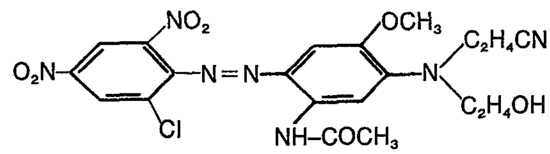

(8) 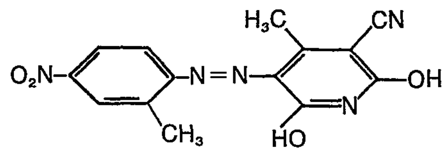

b) Die nichtionogenen Dispergiermittel IV bis XI haben folgende Zusammensetzung

IV: mit 50 Mol Äthylenoxid umgesetzter Glycerinmonoester von disproportionierter Abietinsäure

V: mit 50 Mol Äthylenoxid umgesetzter Hydroabietylalkohol

VI: Umsetzungsprodukt des Glycerinmonoesters von disproportionierter Abietinsäure mit 34 Mol Äthylenoxid

VII: Umsetzungsprodukt von Hydroxyphenol-kolophonium (erhalten aus Phenol und Kolophonium) mit 50 Mol Äthylenoxid

VIII: Umsetzungsprodukt von 2-Hydroxynaphthyl-kolophonium (erhalten aus β-Naphthol und Kolophonium) mit 50 Mol Äthylenoxid

IX: Umsetzungsprodukt von Hydroxy-carboxyphenyl-kolophonium (erhalten aus Salicylsäure und Kolophonium) mit 25 Mol Äthylenoxid

X: Umsetzungsprodukt des Glycerinmonoesters von Benzyl-kolophonium (erhalten aus Benzylchlorid und Kolophonium) mit 34 Mol Äthylenoxid

XI: Umsetzungsprodukt des Kolophonium-Maleinharzes mit 75 Mol Äthylenoxid

c) Die anionischen Dispergiermittel B bis D sind wie folgt charakterisiert:

B: Kondensationsprodukt aus Kresol, Formaldehyd und Natriumsulfit, neutralisiert (DE-PS 2 032 926)

C: Kondensationsprodukt aus Kresol, Schäffersalz, Formaldehyd und Natriumsulfit

D: Ligninsulfonat

d) Konservierungsmittel:

C = Chloracetamid
G = 2,4-Dimethyl-6-acetoxy-(1,3)-dioxan
M = Zn, Na-N,N'-Dimethyldithiocarbaminat
P = Pentachlorphenolnatrium

Beispiel 17

494 Teile eines feuchten Presskuchens des Farbstoffes der Formel (6) mit 81% Feststoffgehalt werden nach Anteigen mit einer Lösung von 50 Teilen des nichtionogenen Dispergiermittels II in 300 Teilen Wasser perlgemahlen. Nach einer Mahldauer von 3 Stunden werden 25 Teile anionisches Dispergiermittel A zugesetzt und eine weitere Stunde perlgemahlen. Der Mahlteig wird dann mit 92,5 Teilen des anionischen Dispergiermittels B versetzt und bei 160–180 °C Eingangs- und 70–80 °C Ausgangstemperatur sprühgetrocknet. Man erhält ein staubarmes, rieselfähiges Pulver mit einem Feststoffgehalt von 71%, das sich beim Einrühren in eine Stammverdickung, ein wässriges Färbebad oder eine wässrige Klotzflotte gut dispergieren lässt.

Beispiel 18

Verwendet man anstatt des anionischen Dispergiermittels B 55 Teile des anionischen Dispergiermittels C und verfährt im übrigen wie in Beispiel 17 beschrieben, so erhält man ein Pulver mit einem Farbstoffgehalt von 75,5%, das ebenfalls die in Beispiel 17 genannten vorteilhaften Eigenschaften besitzt.

**Patentansprüche**

1. Verwendung wasserlöslicher, durch Anlagerung von Äthylenoxid und/oder Propylenoxid an modifizierte Naturharzsäuren gebildete Produkte der allgemeinen Formel (I)

$$A-[(X-O)_n-H]_m \qquad (I)$$

worin A für

a) modifizierte Naturharzsäuren, die durch Disproportionierung, Dimerisierung, Hydrierung, Dehydrierung oder durch Umsetzung aromatischer Hydroxyverbindungen oder halogenabspaltender Aryl-, Aralkyl- oder Cycloalkyl-Verbindungen mit handelsüblichen Kolophoniumarten gewonnen werden, oder

b) Veresterungsprodukte von 1 bis 4 Mol natürlichen oder gemäss a) modifizierten Naturharzsäuren mit 1 Mol eines 2- bis 6wertigen Alkohols oder Gemische solcher Veresterungsprodukte, oder

c) Maleinatharze, die aus handelsüblichen Kolophoniumarten durch Umsetzung mit Maleinsäureanhydrid und anschliessende Veresterung der Anhydridgruppe erhalten werden,

X für gleiche oder verschiedene Gruppen der Formel

$$-CH_2-CH_2- \text{ und } -CH_2-CH(CH_3)-,$$

n für eine Zahl von 8 bis 100, und
m für eine Zahl von 1 bis 5 steht,
als Präparationsmittel für in Wasser schwer lösliche Farbstoffe und optische Aufheller, insbesondere Dispersionsfarbstoffe.

2. Verwendung der Produkte gemäss Anspruch 1, dadurch gekennzeichnet, dass in der allgemeinen Formel (I) A für die unter a) und b) gemäss Anspruch 1 genannten modifizierten Naturharzsäuren und der daraus hergestellten Veresterungsprodukte und n für eine Zahl von 25 bis 75 steht.

3. Verwendung der Produkte gemäss Anspruch 1, dadurch gekennzeichnet, dass man 2–20% eines Produktes gemäss der allgemeinen Formel (I) mit 5–90% Farbstoff, 0–20% anionische Dispergiermittel, 0–70% Wasser und/oder Hilfsmittel einsetzt.

4. Verwendung der Produkte gemäss Anspruch 1, dadurch gekennzeichnet, dass man 2–20% eines Produktes gemäss der allgemeinen Formel (I) mit 30–90% Farbstoff, 0–10% anionische Dispergiermittel, 0–70% Wasser und/oder Hilfsmittel einsetzt.

5. Verwendung der Produkte gemäss Anspruch 1 als Präparationsmittel für Dispersionsfarbstoffe, welche bei atmosphärischem Druck zwischen 150 und 220 °C zu mindestens 60% unzersetzt sublimierbar sind.

**Claims**

1. Use of water-soluble products, obtained by addition of ethylene oxide and/or propylene oxide to modified natural resin acids, of the general formula I

$$A-[(X-O)_n-H]_m \qquad (I)$$

wherein A stands for the radical of

a) modified natural resin acids obtained by disproportionation, dimerization, hydrogenation, dehydrogenation or by a reaction of aromatic hydroxy compounds or aryl, aralkyl or cycloalkyl compounds capable of splitting off halogen with commercial types of colophony, or

b) esterification products of 1 to 4 mols of natural resin acids or of resin acids modified according to a) with 1 mol of a dihydric to hexahydric alcohol, or mixtures of these esterification products, or

c) maleinate resins obtained from commercial types of colophony by a reaction with maleic anhydride and subsequent esterification of the anhydride group;

X stands for identical or different groups of the formula

$$-CH_2-CH_2- \text{ and } -CH_2-CH(CH_3)-;$$

n stands for a number of from 8 to 100, and

m stands for a number of from 1 to 5, as preparation agents for dyestuffs, which are difficultly soluble in water, and optical brighteners, especially dispersion dyestuffs.

2. The use of the products according claim 1, wherein in general formula (I) A stands for the modified natural resin acids and the esterification products made therefrom mentioned under a) and b) of claim 1, and n is a number of from 25 to 75.

3. The use of the products according claim 1, wherein 2 to 20% by weight of a product of general formula (I), 5 to 90% by weight of dyestuff, 0 to 20% by weight of an anionic dispersant and 0 to 70% by weight of water and/or adjuvants are used.

4. The use of the products according claim 1, wherein 2 to 20% by weight of a product of general formula (I), 30 to 90% by weight of dyestuff, 0 to 10% by weight of an anionic dispersant and 0 to 70% by weight of water and/or adjuvants are used.

5. The use of the products according claim 1 as preparation agents for dispersion dyestuffs which can be sublimated without decomposition at atmospheric pressure and a temperature of from 150 to 220 °C in an amount of at least 60%.

**Revendications**

1. Application de produits hydrosolubles qui ont été formés par fixation de l'oxyde d'éthylène et/ou de l'oxyde de propylène sur des acides résiniques naturels modifiés et qui répondent à la formule générale I

$$A-[(X-O)_2-H]_m \qquad (I)$$

dans laquelle A représente:

a) des acides résiniques naturels modifiés qui ont été obtenus par dismutation, dimérisation, hydrogénation, déshydrogénation ou par réaction de composés hydroxyliques aromatiques ou de composés aryliques, aralkyliques ou cycloalkyliques capables de céder un halogène, avec des colophanes du commerce, ou

b) des produits d'estérification de 1 à 4 moles d'acides résiniques naturels non modifiés ou modifiés selon a), avec 1 mole d'un alcool contenant de 2 à 6 radicaux hydroxy alcooliques, ou des mélanges de tels produits d'estérification, ou

c) des résines maléiques qui ont été obtenues à partir de colophanes du commerce par réaction avec l'anhydride maléique, puis estérification du radical anhydride,

X représente des radicaux, identiques ou différents, répondant à l'une des formules:

$$-CH_2-CH_2- \text{ et } -CH_2-CH(CH_3)-,$$

n représente un nombre de 8 à 100 et

m représente un nombre entier de 1 à 5,

comme auxiliaires de préparation pour des azureurs optiques et des colorants peu solubles dans l'eau, plus particulièrement des colorants de dispersion.

2. Application des produits selon la revendication 1, caractérisée en ce que, dans la formule générale (I), le symbole A représente les acides résiniques naturels modifiés et les produits d'estérification de ceux-ci, qui sont mantionnés respectivement sous a) et b) à la revendication 1, et n représente un nombre de 25 à 75.

3. Application des produits selon la revendication 1, caractérisée en ce qu'on utilise de 2 à 20% d'un produit de formule générale (I) avec de 5 à 90% d'un colorant, de 0 à 20% de dispersants anioniques, et de 0 à 70% d'eau et/ou d'adjuvants.

4. Application des produits selon la revendication 1, caractérisée en ce qu'on utilise de 2 à 20% d'un produit de formule générale (I) avec de 30 à 90% d'un colorant, de 0 à 10% de dispersants anioniques, et de 0 à 70% d'eau et/ou d'adjuvants.

5. Application des produits selon la revendication 1 comme auxiliaires de préparation pour des colorants de dispersion qui peuvent se sublimer, sous la pression atmosphérique, entre 150 et 220 °C, en une proportion d'au moins 60% sans subir de décomposition.